# EUROPEAN PATENT APPLICATION

(11) **EP 4 350 171 A1**
(43) Date of publication of application: **10.04.2024**
(21) Application number: 22199350.4
(22) Date of filing: 03.10.2022
(51) Int. Cl.: F16H 3/091, B60K 1/02, B60K 1/00, B60K 17/02, B60K 17/08, B60K 17/16

(54) **DRIVE LINE FOR A VEHICLE, VEHICLE COMPRISING THE DRIVE LINE AND HEATING METHOD USING THE DRIVE LINE**

(71) Applicant: VOLVO TRUCK CORPORATION, 405 08 Göteborg (SE)
(72) Inventor: BROLLES, Vincent, 69720 Saint Laurent de Mure (FR); BARILLOT, Thomas, 69440 MORNANT (FR)
(74) Representative: Germain Maureau

(57) **Abstract**

A drive line for vehicle (100) comprising:
- at least one electric motor (EM1, EM2) having a driving shaft (12, 14),
- a multi-ratio gearbox (16) comprising at least an input shaft (16A, 16C) and an output shaft (16B),
- a first clutch (20) configured to rotatably couple/decouple the driving shaft (12) with the input shaft (16A),
- a differential assembly (22) mechanically connected to the output shaft (16B), and
- a second clutch (26) configured to rotatably couple/decouple a retarder (24) with one of the shafts (16A, 16B, 16C) of the multi-ratio gearbox (16).

## Description

### TECHNICAL FIELD

The disclosure relates generally to a drive line for a vehicle. In particular aspects, the disclosure relates to a drive line for a vehicle, a vehicle comprising the drive line and a heating method using the drive line. The disclosure can be applied in heavy-duty vehicles, such as trucks, buses, and construction equipment. Although the disclosure may be described with respect to a particular vehicle, the disclosure is not restricted to any particular vehicle.

### BACKGROUND

Traditional electric drive lines may allow recovering energy when the vehicle needs to slow down or to brake. However, in such drive lines, the safety of the battery in which energy is stored may be difficult to manage, while in some cases the battery may be destroyed. Therefore, a need exists in this respect.

### SUMMARY

According to a first aspect of the disclosure, a drive line for vehicle may comprise at least one electric motor having a driving shaft, a multi-ratio gearbox comprising at least an input shaft and an output shaft, a first clutch configured to rotatably couple/decouple the driving shaft with the input shaft, a differential assembly mechanically connected to the output shaft, and a second clutch configured to rotatably couple/decouple a retarder with one of the shafts of the multi-ratio gearbox. The first aspect of the disclosure may allow a configuration wherein it is possible to slow down (or brake) the vehicle using only the retarder, thereby avoiding driving the electric motor as a generator and overloading a battery.

The at least one electric motor may be an electric motor/generator. The second clutch may be part of the retarder, or may be distinct from the retarder. The multi-ratio gearbox may comprise strictly two shafts, i.e. the input shaft and the output shaft, or more than two shafts, for example one or more additional input shaft(s), one or more additional output shaft(s), one or more intermediate shaft(s) between the input shaft(s) and the output shaft (s), etc.

In some examples, the second clutch may be configured to couple/decouple the retarder with the input shaft.

In some examples, a third clutch may be configured to rotatably couple/decouple the input shaft with the output shaft.

In some examples, the input shaft may extend along a longitudinal axis between a first axial end and a second axial end (i.e. the longitudinal axis may comprise the first axial end and the second axial end), wherein the driving shaft is coupled to the input shaft at the first axial end and the retarder is coupled to the input shaft at the second axial end.

In some examples, the second clutch may be configured to be controlled by a driver using a control element such as a brake pedal or a manual switch provided on vehicle dashboard

In some examples, the control element may be a brake pedal that also enables to control vehicle wheel brakes, e.g. disc brake systems, and to achieve regenerative braking using the at least one electric motor as a generator

In some examples, the second clutch may be configured to be automatically controlled by a cruise control system to slow down the vehicle under downhill driving conditions

In some examples, the at least one electric motor, the multi-ratio gearbox, the clutches, the differential assembly and the retarder are provided on a single and same vehicle axle, e.g. called "E-axle" or "electric axle".

In some examples, the drive line may comprise a second electric motor having a second driving shaft, wherein the multi-ratio gearbox comprises a second input shaft and a fourth clutch configured to rotatably couple/decouple the second driving shaft with the output shaft via the second input shaft.

According to a second aspect of the disclosure, a vehicle may comprise the drive line according to any one of the examples of the present disclosure.

In some examples, the vehicle may further include a liquid circuit for supplying the retarder with liquid, the retarder including an inlet port for cool liquid and an outlet port for hot liquid, the inlet port and the outlet port being fluidly connected to the liquid circuit.

In some example, said liquid circuit may include a heat exchanger. This may help to cool the fluid flowing in the liquid circuit.

According to a third aspect of the disclosure, a method for heating a liquid flowing inside the liquid circuit of the vehicle according any on the examples of the present disclosure, the drive line comprising a third clutch, may comprise: a) operating (e.g. opening) the third clutch to rotatably decouple the output shaft from the input shaft; b) operating (e.g. closing) the second clutch to rotatably couple the one shaft of the multi-ratio gearbox to the retarder; c) operating (e.g. closing) the first clutch to rotatably couple the driving shaft to the input shaft; and d) running the at least one electric motor to warm up the liquid inside the retarder while the vehicle is at a standstill (e.g. gearbox open).

With the configuration set in the above method, the motor may drive the retarder alone, without driving the differential assembly. Therefore, the vehicle may rests in place (i.e. does not move), while the retarder may heat as being driven. The fluid circuit may recover the heat generated by the retarder and may provide this heat to any other system(s) of the vehicle and/or the cab of the vehicle. Of course, if the drive line is provided with a second electric motor and a fourth clutch, the fourth clutch may be operated to rotatably decouple the second driving shaft and the output shaft.

All or part of the above aspects/examples may help to provide an efficient and/or compact multi-speeds drive train enabling battery safety.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benefits.

### BRIEF DESCRIPTION OF THE DRAWINGS

With reference to the appended drawings, below follows a more detailed description of aspects of the disclosure cited as examples.
**FIG. 1** is an exemplary vehicle according to one example,
**FIG. 2** is an exemplary drive train of the vehicle of claim 1, and
**FIG 3** shows different exemplary operating modes of the drive train of figure 2.

### DETAILED DESCRIPTION

Aspects set forth below represent the necessary information to enable those skilled in the art to practice the disclosure.

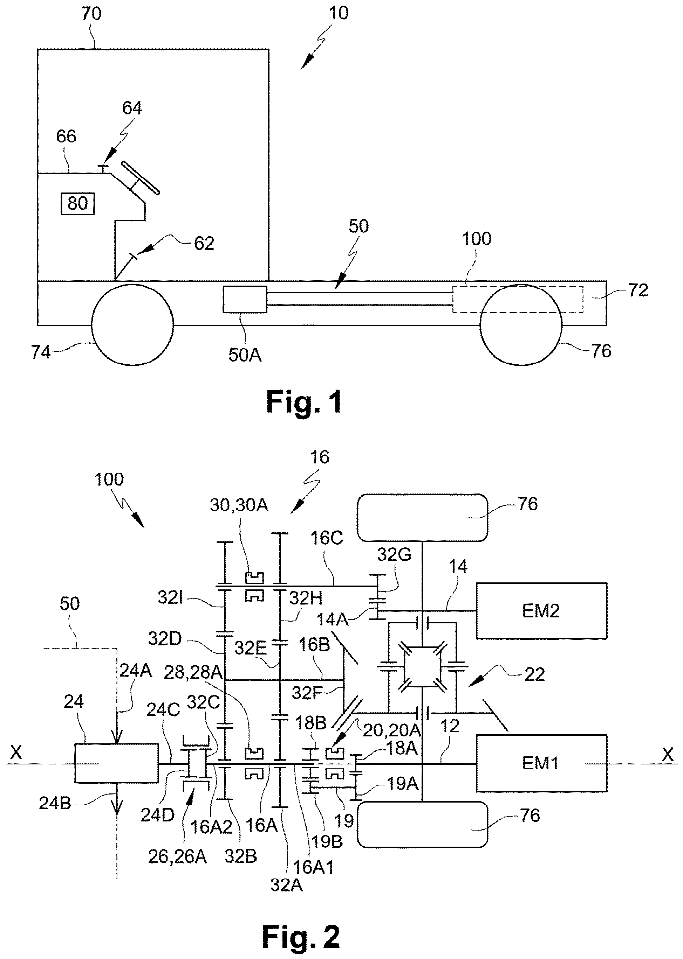

Figure 1 shows a vehicle 10, in the present example a truck-tractor or prime mover, having a cab 70, a chassis 72, and front and rear wheels 74 and 76. The vehicle 10 is provided with a drive line 100, shown in dashed-lines. The drive line 100 may form a single and same vehicle electric axle, or E-axle. For example, all the elements of the drive line 100, which will be described with more details hereunder, for example electric motors EM1, EM2, a multi-ratio gearbox 16, clutches 20, 26, 28 and 30, a differential assembly 22 and a retarder 24 may be provided on a single and same vehicle axle. The vehicle 10 may comprise a liquid circuit 50 for supplying the drive line 100, for example the retarder 24, with liquid (or cooling liquid). For example, the retarder 24 may comprise an inlet port 24A for cool liquid and an outlet port 24B for hot liquid, the inlet port 24A and the outlet port 24B being fluidly connected to the liquid circuit 50 (see figure 2). The liquid circuit 50 may comprise a heat exchanger 50A, for example an air/liquid heat exchanger.

The drive line 100 is described with more details with reference to figure 2. The drive line 100 may comprise at least one electric motor (or electric motor/generator) EM1, EM2 having a driving shaft 12, 14. In the present example, the drive line 100 may comprise two electric motors, namely a (first) electric motor EM1 and a second electric motor EM2, the electric motor EM1 having a (first) driving shaft 12 and the second electric motor EM2 having a second driving shaft 14. The two electric motors EM1 and EM2 may be different or similar (e.g. similar characteristics such as supply voltage, operating current, torque-speed characteristic and/or mechanical power, etc.). For example, the mechanical power of the electric motors EM1 and EM2 may lie between 50kW and 500 kW. The electric motors EM1 and EM2 may be of AC (synchronous or asynchronous) or DC (brushed or brushless) type.

The drive line 100 may comprise a multi-ratio gearbox 16 including at least a (first) input shaft 16A and an output shaft 16B. In the present example, the multi-ratio gearbox 16 may also comprise a second input shaft 16C. The multi-ratio gearbox 26 may comprise only three shafts, namely the input shaft 16A, the second input shaft 16C and the output shaft 16B. The drive line 100 may comprise a differential assembly 22 mechanically connected to the output shaft 16B.

The drive line 100 (or the multi-ratio gearbox 16) may comprise a first clutch 20 configured to rotatably couple/decouple the driving shaft 12 with the input shaft 16A. The drive line 100 (or the multi-ratio gearbox 16) may comprise a second clutch 26 configured to rotatably couple/decouple a retarder 24 with one of the shafts 16A, 16B, 16C of the multi-ratio gearbox 16. In the present example, the second clutch 26 may be configured to couple/decouple the retarder 24 with the input shaft 16A. The drive line 100 (or the multi-ratio gearbox 16) may comprise a third clutch 28 configured to rotatably couple/decouple the input shaft 16A with the output shaft 16B. The drive line 100 (or the multi-ratio gearbox 16) may comprise a fourth clutch 30 configured to rotatably couple/decouple the second driving shaft 14 with the output shaft 16B via the second input shaft 16C. The first, second, third and or fourth clutches 20, 26, 28, 30 may each be a dog clutch. The second clutch 26 may be integrated together with the retarder 24, i.e. may form a single and same unit. The second clutch 26 may be configured to be controlled by a driver of the vehicle 10 using a control element such as a brake pedal 62 or a manual switch 64 provided on vehicle dashboard 66 (see figure 1). For example, the control element may be the brake pedal 62, which also enables to control vehicle wheel brakes, e.g. disc brake systems, and to achieve regenerative braking using the at least one electric motor EM1, EM2 as a generator. The second clutch 26 may be configured to be automatically controlled by a cruise control system 80 to slow down the vehicle 10 under downhill driving conditions.

In the present example, the input shaft 16A may extend along a longitudinal axis X between a first axial end 16A1 and a second axial end 16A2. The driving shaft 12 may be coupled to the input shaft 16A at the first axial end 16A1 and the retarder 24 may be coupled to the input shaft 16A at the second axial end 16A2. In the present example, the driving shaft 12, the input shaft 16A and an input shaft 24C of the retarder 24 may be coaxial. The output shaft 16B may be parallel to the input shaft 16A. The second input shaft 16C may be parallel to the input shaft 16A and to the output shaft 16B. The second input shaft 16C may be disposed opposite to the input shaft 16A relative to the output shaft 16B. In other words, the input shaft 16A, the output shaft 16B and the second input shaft 16C may be arranged parallel to each other and in a same plane (or their respective axis may be in a same plane), e.g. the plane of figure 2, and the output shaft 16B may be arranged between the input shaft 16A and the second input shaft 16C.

The driving shaft 12 and the input shaft 16A may be coaxial and the multi-ratio gearbox 16 may comprises a (first) driving gear 18A rotatably coupled to and coaxial with the driving shaft 12, an input gear 18B (or input idle gear 18B, coaxial with the input shaft 16A) configured to be rotatably coupled/decoupled to/from the input shaft 16A, and a countershaft 19 bearing a first counter gear 19A meshed with the driving gear 18A and a second counter gear 19B meshed with the input gear 18B. The first clutch 20 may comprise a first movable member 20A which is axially movable along the axis X between a first coupling position (not shown, first movable member 20A to the right in figure 2) wherein input gear 18B is decoupled from the input shaft 16A and the driving shaft 12 is directly rotatably coupled with the input shaft 16A, a second coupling position (not shown, first movable member 20 to the left in figure 2) wherein the input gear 18B is coupled to the input shaft 16A so that the driving shaft 12 is rotatably coupled with the input shaft 16A only via the countershaft 19 and the first and second counter gears 19A, 19B, and a neutral position (shown in figure 2) wherein the driving shaft 12 and the input shaft 16A are free to rotate relative to each other.

The multi-ratio gearbox 16 may comprise a first gear 32A (or first idle gear 32A, coaxial with the input shaft 16A) configured to be rotatably coupled/decoupled to/from the input shaft 16A and a second gear 32B (or second idle gear 32B, coaxial with the input shaft 16A) configured to be rotatably coupled/decoupled to/from the input shaft 16A. The third clutch 28 may comprise a third movable member 28A which is axially movable along the axis X between a first coupling position (not show, third movable member 28A to the right in figure 2) wherein the first gear 32A is coupled to the input shaft 16A and the second gear 32B is decoupled from the input shaft 16A, a second coupling position (not show, third movable member 28A to the left in figure 2) wherein the second gear 32B is coupled to the input shaft 16A and the first gear 32A is decoupled from the input shaft 16A, and a neutral position (shown in figure 2) wherein both the first gear 32A and the second gear 32B are decoupled from the input shaft 16A.

The input shaft 16A may bear at its second axial end 16A2 a third gear 32C. The input shaft 24C of the retarder 24 may bear an input gear 24D. The second clutch 26 may have a second movable member 26A which is axially movable along the axis X between a coupling position (shown in figure 2) wherein the input shaft 16A is rotatable coupled with the input shaft 24C of the retarder 24, and neutral position (not shown, second movable member 26A to the left or to the right in figure 2) wherein the input shaft 16A and the input shaft 24C of the retarder 24 are decoupled from each other.

The output shaft 16B may bear a fourth gear 32D meshed with the second gear 32B, a fifth gear 32E meshed with the first gear 32A, and an output gear 32F, meshed with the differential assembly 22. The differential assembly 22 of the present example is well known by the skilled person and is not described with more detail.

The second input shaft 16C may bear a sixth gear 32G and the second driving shaft 14 may bear a second driving gear 14A meshed with sixth gear 32G.

The multi-ratio gearbox 16 may comprise a seventh gear 32H (or seventh idle gear 32H, coaxial with the second input shaft 16C) configured to be rotatably coupled/decoupled to/from the second input shaft 16B and a eighth gear 321 (or eighth idle gear 321, coaxial with the second input shaft 16B) configured to be rotatably coupled/decoupled to/from the second input shaft 16B. The seventh gear 32H may be meshed with the fifth gear 32E and the eighth gear 321 may be meshed with the fourth gear 32D. The fourth clutch 30 may comprise a fourth movable member 30A which is axially movable parallel to the axis X between a first coupling position (not show, fourth movable member 30A to the right in figure 2) wherein the seventh gear 32H is coupled to the second input shaft 16C and the eighth gear 321 is decoupled from the second input shaft 16B, a second coupling position (not show, fourth movable member 30A to the left in figure 2) wherein the eighth gear 321 is coupled to the second input shaft 16B and the seventh gear 32H is decoupled from the second input shaft 16B, and a neutral position (shown in figure 2) wherein both the seventh gear 32H and the eighth gear 321 are decoupled from the second input shaft 16C.

Due to the above described structure, the drive line 100 may adopt many different configurations with different speed ratios.

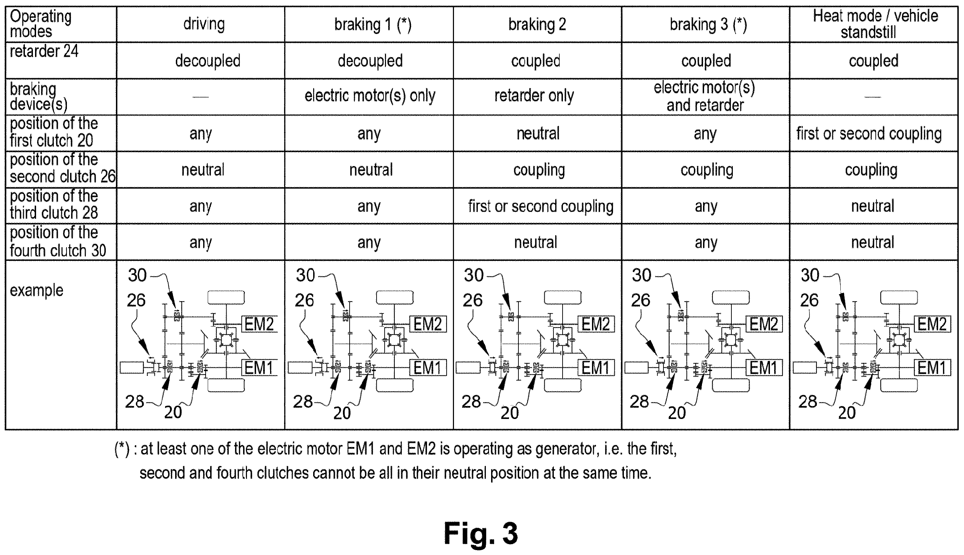

Table of figure 3 summarize different exemplary operating modes (or configurations) of the drive line 100.

In the driving mode, the retarder 24 is decoupled from the multi-ratio gearbox 16 and the electric motors EM1 and EM2 are operated as motors (and not as generators). The second clutch 26 (or the second movable member 26A) is in the neutral position. The first, third and fourth clutches 18, 28 and 30 (or their respective movable members) may adopt any positions, i.e. first or second coupling position or neutral position.

In a first braking mode, or braking mode 1, only one of the, or the two, electric motors EM1 and EM2 is/are used as generator(s) (and not as motor(s)), to brake. In such a braking mode, the second clutch 26 (or the second movable member 26A) is in the neutral position and the first, third and fourth clutches 18, 28 and 30 (or their respective movable members) may adopt any positions, i.e. first or second coupling position or neutral position, provided that at least one of the electric motors EM1 and EM2 is coupled in rotation with the output shaft 16C. In other words, in such a braking mode, the first, third and fourth clutches 18, 28, 30 (or their respective movable members) cannot all adopt their respective neutral positions at the same time. For example, the first and third clutches 18, 28 may be in their respective first or second coupling positions and the fourth clutch 30 may be in its neutral position, the first and third clutches 18, 28 may be in their respective neutral positions and the fourth clutch 30 may be in its first or second coupling position, or the first, third and fourth clutches 18, 28, 30 may be all in their respective first or second coupling positions.

In the second braking mode, or braking mode 2, only the retarder 24 is used to brake. In such a braking mode, the electric motors EM1 and EM2 are decoupled from, and the retarder 24 is coupled to, the multi-ratio gearbox 16. In other words, the second clutch 26 (or the second movable member 26A) is in its coupling position, the third clutch 28 (or the third movable member 28A) is in its first or second coupling position, and the first and fourth clutches 18, 30 (or the first and fourth movable members 18A, 30A) are in their respective neutral positions.

In the third braking mode, or braking mode 3, both the retarder 24 and one or the two electric motors EM1 and EM2 (as generators and not as motors) are used. In such a braking mode, the second clutch 26 (or the second movable member 26A) is in its coupling position and the first, third and fourth clutches 18, 28 and 30 (or their respective movable members) may adopt any positions, i.e. first or second coupling position or neutral position, provided that at least one of the electric motors EM1 and EM2 is coupled in rotation with the output shaft 16C. In other words, in such a braking mode, the first, third and fourth clutches 18, 28, 30 (or their respective movable members) cannot all adopt their respective neutral positions at the same time. For example, the first and third clutches 18, 28 may be in their respective first or second coupling positions and the fourth clutch 30 may be in its neutral position, the first and third clutches 18, 28 may be in their respective neutral positions and the fourth clutch 30 may be in its first or second coupling position, or the first, third and fourth clutches 18, 28, 30 may be all in their respective first or second coupling positions.

The drive line 100 may also adopt a heat mode when the vehicle 10 is at a standstill. Such a mode may corresponds to a method for heating a liquid flowing inside the liquid circuit of the vehicle, comprising a) operating the third clutch 28 to rotatably decouple the output shaft 16B from the input shaft 16A and, in the present example, operating the fourth clutch 30 to rotatably decouple the output shaft 16B from the second input shaft 16C; b) operating the second clutch 26 to rotatably couple the one shaft, in the present example the input shaft 16A, of the multi-ratio gearbox 16 to the retarder 24; c) operating the first clutch 20 to rotatably couple the driving shaft 12 to the input shaft 16A. and d) running the at least one electric motor, in the present example the electric motor EM1, to warm up the liquid inside the retarder 24 while the vehicle is at a standstill. The electric motor EM1 may be used as a motor. In such a configuration, the first clutch 20 (or the first movable member 20A) may be in its first or second coupling position, the second clutch 26 (or the second movable member 26A) may be in its coupling position, and the third and fourth clutches 28, 30 (or the third and fourth movable member 28A, 30A), may be in their respective neutral positions.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A drive line for vehicle (100) comprising:
- at least one electric motor (EM1, EM2) having a driving shaft (12, 14),
- a multi-ratio gearbox (16) comprising at least an input shaft (16A, 16C) and an output shaft (16B),
- a first clutch (20) configured to rotatably couple/decouple the driving shaft (12) with the input shaft (16A),
- a differential assembly (22) mechanically connected to the output shaft (16B), and
- a second clutch (26) configured to rotatably couple/decouple a retarder (24) with one of the shafts (16A, 16B, 16C) of the multi-ratio gearbox (16).

2. The drive line for vehicle (100) according to claim 1, wherein the second clutch (26) is configured to couple/decouple the retarder (24) with the input shaft (16A).

3. The drive line for vehicle (100) according to claim 1 or 2, wherein a third clutch (28) is configured to rotatably couple/decouple the input shaft (16A) with the output shaft (16B).

4. The drive line for vehicle (100) according to any one of claims 1 to 3, wherein the input shaft (16A) extends along a longitudinal axis (X) between a first axial end (16A1) and a second axial end (16A2), wherein the driving shaft (12) is coupled to the input shaft (16A) at the first axial end (16A1) and the retarder (24) is coupled to the input shaft (16A) at the second axial end (16A2).

5. The drive line for vehicle (100) according to any one of claims 1 to 4, wherein the second clutch (26) is configured to be controlled by the driver using a control element (62, 64) such as a brake pedal or a manual switch provided on vehicle dashboard (66).

6. The drive line for vehicle (100) according to claim 5, wherein the control element is a brake pedal (62) that also enables to control vehicle wheel brakes, e.g. disc brake systems, and to achieve regenerative braking using the at least one electric motor (EM1, EM2) as a generator.

7. The drive line for vehicle (100) according to any one of claims 1 to 6, wherein the second clutch (26) is configured to be automatically controlled by a cruise control system (80) to slow down the vehicle (10) under downhill driving conditions.

8. The drive line for vehicle (100) according to any one of claims 1 to 7, wherein the at least one electric motor (EM1, EM2), the multi-ratio gearbox (16), the clutches (20, 26), the differential assembly (22) and the retarder (24) are provided on a single and same vehicle axle.

9. The drive line for vehicle (100) according to any one of claims 1 to 8, comprising a second electric motor (EM2) having a second driving shaft (14), wherein the multi-ratio gearbox (16) comprises a second input shaft (16C) and a fourth clutch (30) configured to rotatably couple/decouple the second driving shaft (14) with the output shaft (16B) via the second input shaft (16C).

10. A vehicle (10) comprising a drive line for vehicle (100) according to any one of claims 1 to 9.

11. The vehicle (10) according to claim 10, further including a liquid circuit (50) for supplying the retarder (24) with liquid, the retarder (24) including an inlet port (24A) for cool liquid and an outlet port (24B) for hot liquid, the inlet port (24A) and the outlet port (24B) being fluidly connected to the liquid circuit (50).

12. The vehicle (10) according to claim 11, wherein said liquid circuit (50) includes a heat exchanger (50A).

13. A method for heating a liquid flowing inside the liquid circuit (50) of the vehicle (10) according to claim 11 or 12, the vehicle (10) comprising a drive line (100) according to claim 3, the method comprising:
a) operating the third clutch (28) to rotatably decouple the output shaft (16B) from the input shaft (16A);
b) operating the second clutch (26) to rotatably couple the one shaft of the multi-ratio gearbox (16) to the retarder (24);
c) operating the first clutch (20) to rotatably couple the driving shaft (12, 14) to the input shaft (16A);
d) running the at least one electric motor (EM1, EM2) to warm up the liquid inside the retarder (24) while the vehicle is at a standstill.
